# EUROPEAN PATENT APPLICATION

(11) **EP 4 783 594 A1**
(43) Date of publication of application: **29.07.2026**
(21) Application number: 23954434.9
(22) Date of filing: 27.09.2023
(51) Int. Cl.: H04N 21/462, H04N 21/2662, H04N 21/81, G09G 5/00

(54) **VIDEO DISPLAY APPARATUS AND OPERATING METHOD THEREOF**

(71) Applicant: LG Electronics Inc., Yeongdeungpo-gu Seoul 07336 (KR)
(72) Inventor: CHOI, Taeho, Seoul 06772 (KR); KANG, Yeeun, Seoul 06772 (KR)
(74) Representative: Vossius & Partner Patentanwälte Rechtsanwälte mbB
(86) International application number: PCT/KR2023/015121
(87) International publication number: WO 2025/070849

(57) **Abstract**

The present disclosure relates to a video display apparatus and a method of operating the same. The video display apparatus includes: a network interface configured to communicate with a server that provides a stream segment using Adaptive Bitrate Streaming; a display; a memory configured to store bitrate data; and a controller configured to output a video, corresponding to the stream segment, through the display, wherein the controller is configured to determine whether there is a first bitrate managed by the controller in response to a streaming target being set, determine a target bitrate based on the first bitrate in response to there being the first bitrate, determine the target bitrate based on a second bitrate included in the bitrate data in response to there not being the first bitrate, and request the server to transmit a stream segment corresponding to the target bitrate.

## Description

### [Technical Field]

The present disclosure relates to a video display apparatus and a method of operating the same.

### [Background Art]

A video display apparatus is an apparatus having a function of providing a video viewable by a user. For example, the video display apparatus may include a television (TV), a monitor, a notebook computer, and the like having a liquid crystal display (LCD) using liquid crystals or an organic light emitting diode (OLED) display using OLEDs.

Recently, with the rapid growth of the Internet, multimedia services that provide content over an Internet Protocol (IP) network as a main transport network are being actively used. The digital broadcasting has been developed in a direction that requires more traffic, such as stereoscopic 3-dimensional (3D) video broadcasting, Ultra High Definition (UHD) broadcasting, 3D multi-view video broadcasting, hologram broadcasting, etc.

With the development of display technology and demands from consumers that consume media, adaptive bitrate streaming is used to effectively transmit content according to a network bandwidth. The adaptive bitrate streaming scheme creates segments corresponding to various bitrates for one content and stores them on a server, and transmits a segment corresponding to a selected bitrate according to bandwidth, performance, and the like of a receiving device. It is called HTTP adaptive streaming, since content is mostly transmitted using the HTTP protocol in an open Internet environment.

In an existing method, a receiving device receives a segment for specific content based on a lowest bitrate among various bitrates, and then selects an optimal bitrate based on a network bandwidth and the like. However, according to the existing method, when a streaming target is selected or changed by executing an application that provides a streaming service, there is a problem in that a low-quality video corresponding to the lowest bitrate is initially output regardless of the network environment or the performance of the receiving device. In addition, as the bitrate for receiving stream segments increases stepwise, there is a problem in that it takes time to output a video of optimal quality corresponding to the network environment or the performance of the receiving device.

### [Disclosure of invention]

### [Technical Problem]

It is an objective of the present disclosure to solve the above and other problems.

It is another objective of the present disclosure to provide a video display apparatus capable of providing a high-quality video from the beginning and a method of operating the same, in the case of using adaptive bitrate streaming.

It is yet another objective of the present disclosure to provide a video display apparatus in which a bitrate optimized for a network environment where content is provided can be selected from the beginning and a method of operating the same, in the case of using adaptive bitrate streaming.

### [Solution to Problem]

In accordance with an aspect of the present disclosure, the above and other objectives can be accomplished by providing a video display apparatus including: a network interface configured to communicate with a server that provides a stream segment using Adaptive Bitrate Streaming; a display; a memory configured to store bitrate data; and a controller configured to output a video, corresponding to the stream segment, through the display, wherein the controller is configured to determine whether there is a first bitrate managed by the controller in response to a streaming target being set, determine a target bitrate based on the first bitrate in response to there being the first bitrate, determine the target bitrate based on a second bitrate included in the bitrate data in response to there not being the first bitrate, and request the server to transmit a stream segment corresponding to the target bitrate.

In accordance with another aspect of the present disclosure, the above and other objectives can be accomplished by providing a method of operating a video display apparatus configured to receive a stream segment using Adaptive Bitrate Streaming, the method including: in response to a streaming target being set, determining whether there is a first bitrate managed by a controller; in response to there being the first bitrate, determining a target bitrate based on the first bitrate; in response to there not being the first bitrate, determining the target bitrate based on a second bitrate included in the bitrate data stored in a memory; requesting a server to transmit a stream segment corresponding to the target bitrate; and outputting a video corresponding to the stream segment corresponding to the target bitrate through a display.

### [Advantageous Effects of Disclosure]

A video display apparatus and a method of operating the same according to the present disclosure have the following effects.

According to at least one of the embodiments of the present disclosure, a high-quality video can be provided from the beginning in the case of using adaptive bitrate streaming.

According to at least one of the embodiments of the present disclosure, a bitrate optimized for a network environment where content is provided can be selected from the beginning in the case of using adaptive bitrate streaming.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the spirit and scope of the present disclosure will become apparent to those skilled in the art from this detailed description.

### [Brief Description of Drawings]

FIG. 1 is a diagram illustrating a video display system according to an embodiment of the present disclosure.
FIG. 2 is an internal block diagram of a video display apparatus according to an embodiment of the present disclosure.
FIG. 3 is an internal block diagram of a controller according to an embodiment of the present disclosure.
FIG. 4 is a diagram illustrating a method of controlling a remote controller according to an embodiment of the present disclosure.
FIG. 5 is a diagram illustrating a Web OS architecture according to an embodiment of the present disclosure.
FIG. 6 is a diagram illustrating the architecture of a Web OS device according to an embodiment of the present disclosure.
FIG. 7 is a diagram illustrating a graphic composition flow in a Web OS device according to an embodiment of the present disclosure.
FIG. 8 is a diagram illustrating a media server according to an embodiment of the present disclosure.
FIG. 9A is a block diagram illustrating a media server according to an embodiment of the present disclosure, and FIG. 9B is a diagram illustrating a relationship between a media server and a TV service according to an embodiment of the present disclosure.
FIG. 10 is an internal block diagram of a video display apparatus according to an embodiment of the present disclosure.
FIG. 11 is a flowchart illustrating a method of operating a video display apparatus according to an embodiment of the present disclosure.
FIGS. 12 and 13 are graphs of bitrates for receiving stream segments, according to an embodiment of the present disclosure.
FIGS. 14 and 15 are diagrams illustrating a screen output through a video display apparatus according to an embodiment of the present disclosure.

### [Mode of Disclosure]

Hereinafter, the present disclosure will be described in detail with reference to the accompanying drawings. In order to clearly and briefly describe the present disclosure, components that are irrelevant to the description will be omitted in the drawings, and the same reference numerals are used throughout the drawings to designate the same or similar components.

The suffixes, such as "module" and "unit," for elements used in the following description are given simply in view of the ease of the description, and do not have a distinguishing meaning or role. Therefore, the "module" and "unit" may be used interchangeably.

It should be understood that the terms "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

It will be understood that, although the terms first, second, etc., may be used herein to describe various elements, these elements should not be limited by these terms. These terms are only used to distinguish one element from another.

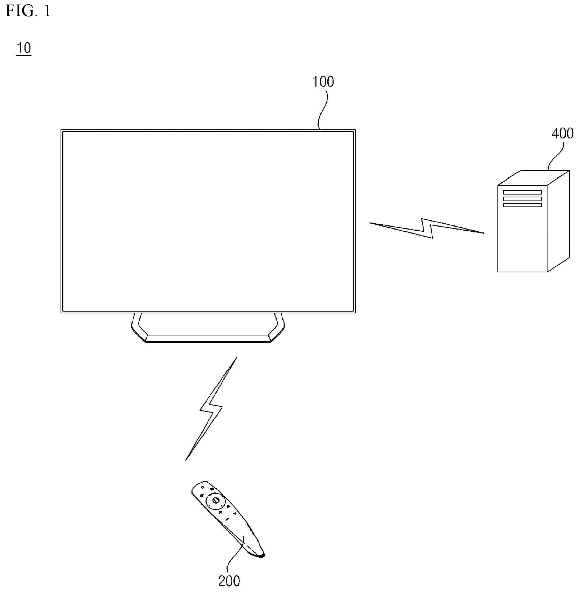

FIG. 1 is a diagram illustrating a video display system according to various embodiments of the present disclosure.

Referring to FIG. 1, a video display system 10 includes a video display apparatus 100 and/or a remote controller 200.

The video display apparatus 100 may be a device for processing and outputting a video. The video display apparatus 100 may be a TV, a notebook computer, a monitor, etc., and is not particularly limited as long as the video display apparatus is capable of outputting a screen corresponding to a video signal.

The video display apparatus 100 may receive a broadcast signal and process the received signal, and may output a signal-processed broadcast image. Upon receiving the broadcast signal, the video display apparatus 100 may serve as a broadcast receiving device.

The video display apparatus 100 may receive the broadcast signal wirelessly through an antenna or by wire via cables. For example, the video display apparatus 100 may receive a terrestrial broadcast signal, a satellite broadcast signal, a cable broadcast signal, an Internet Protocol TV (IPTV) broadcast signal, and the like.

The remote controller 200 may be connected wirelessly and/or by wire to the video display apparatus 100 to provide various control signals to the video display apparatus 100. In this case, the remote controller 200 may include a device for establishing a wired/wireless network with the video display apparatus 100 and for transmitting various control signals to the video display apparatus 100 or for receiving, from the video display apparatus 100, signals related to various operations processed by the video display apparatus 100, through the established network.

For example, various input devices, such as a mouse, a keyboard, a pointing device, a trackball, a joystick, etc., may be used as the remote controller 200. The remote controller 200 may be referred to as an external device, and the external device and the remote controller will be used interchangeably as needed hereinafter.

The video display apparatus 100 may be connected to only a single remote controller 200 or may be simultaneously connected to two or more remote controllers 200, and may change an object displayed on a screen or adjust a screen state based on control signals provided by the respective remote controllers 200.

The video display system 10 may further include at least one server 400. The video display apparatus 100 may transmit and receive data with the server 400. For example, the video display system 100 may transmit and receive data with the server 400 via a network such as the Internet.

The video display apparatus 100 may transmit data related to an operation performed based on user input, and the server 400 may store the data received from the video display apparatus 100.

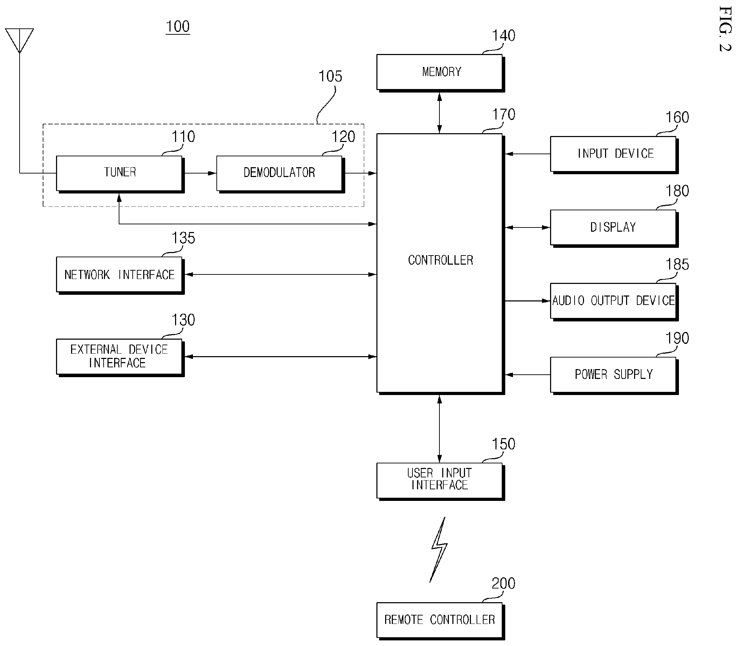

FIG. 2 is an internal block diagram of the video display apparatus of FIG. 1.

Referring to FIG. 2, the video display apparatus 100 may include a broadcast receiver 105, an external device interface 130, a network interface 135, a memory 140, a user input interface 150, an input device 160, a controller 170, a display 180, an audio output device 185, and/or a power supply 190.

The broadcast receiver 105 may include a tuner 110 and a demodulator 120.

Meanwhile, unlike the drawing, the video display apparatus 100 may include only the broadcast receiver 105 and the external device interface 130, among the broadcast receiver 105, the external device interface 130, and the network interface 135. That is, the video display apparatus 100 may not include the network interface 135.

The tuner 110 may select a broadcast signal corresponding to a channel selected by a user or broadcast signals corresponding to all prestored channels from among broadcast signals received via an antenna (not shown) or a cable (not shown). The tuner 110 may convert a selected broadcast signal into an intermediate frequency (IF) signal or a baseband video or audio signal.

For example, if the selected broadcast signal is a digital broadcast signal, the tuner 110 may convert the selected broadcast signal into a digital IF signal (DIF), and if the selected broadcast signal is an analog broadcast signal, the tuner 100 may convert the selected broadcast signal into an analog baseband video or audio signal CVBS/SIF. That is, the tuner 110 may process digital broadcast signals or analog broadcast signals. The analog baseband video or audio signal CVBS/SIF output from the tuner 110 may be directly input to the controller 170.

Meanwhile, the tuner 110 may sequentially select broadcast signals of all the broadcast channels stored through a channel memory function from among the received broadcast signals and may convert the selected broadcast signals into intermediate frequency (IF) signals or baseband video or audio signals.

Meanwhile, the tuner 110 may include a plurality of tuners for receiving broadcast signals of a plurality of channels. Alternatively, the tuner 110 may be a single tuner that simultaneously receives broadcast signals of a plurality of channels.

The demodulator 120 may receive a digital IF signal DIF converted by the tuner 110 and may demodulate the digital IF signal.

Upon performing demodulation and channel decoding, the demodulator 120 may output a stream signal TS. In this case, the stream signal may be a multiplexed video signal, audio signal or data signal.

The stream signal output from the demodulator 120 may be input to the controller 170. Upon performing demultiplexing, video/audio signal processing, etc., the controller 170 may output an image to the display 180 and may output sound to the audio output device 185.

The external device interface 130 may transmit or receive data to or from a connected external device. To this end, the external device interface 130 may include an A/V input/output unit (not shown).

The external device interface 130 may be connected by wire/wirelessly to external devices, such as a digital versatile disc (DVD) player, a Blu-ray player, a game console, a camera, a camcorder, a computer (laptop), a set-top box, etc., and may perform input/output operations for external devices.

In addition, the external device interface 130 may establish a communication network with various remote controllers 200 as illustrated in FIG. 1, and may receive control signals related to operation of the video display apparatus 100 from the remote controller 200 or may transmit data related to operation of the video display apparatus 100 to the remote controller 200, through the established communication network.

The A/V input/output unit may receive video and audio signals of an external device. For example, the A/V input/output unit may include an Ethernet terminal, a USB port, a composite video banking sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, etc. A digital signal input through such terminals may be transmitted to the controller 170. In this case, an analogue signal input through the CVBS terminal and the S-video terminal may be converted into a digital signal by an analogue/digital conversion unit (not shown), and then may be transmitted to the controller 170.

The external device interface 130 may include a wireless communication unit (not shown) for short-range wireless communication with other electronic devices. The external device interface 130 may exchange data with an adjacent mobile terminal through the wireless communication unit. For example, in a mirroring mode, the external device interface 130 may receive device information, running application information, application image, and the like from the mobile terminal.

The external device interface 130 may perform short-range wireless communication using Bluetooth, Radio Frequency Identification (RFID), infrared Data Association (IrDA), Ultra-Wideband (UWB), ZigBee, and the like.

The network interface 135 may provide an interface for connecting the video display apparatus 100 to a wired/wireless network including an Internet network.

The network interface 135 may include a communication module (not shown) for connection with the wired/wireless network. For example, the network interface 135 may include a communication module for Wireless LAN (WLAN; Wi-Fi), Wireless broadband (Wibro), World Interoperability for Microwave Access (Wimax), High Speed Downlink Packet Access (HSDPA), and the like.

The network interface 135 may transmit or receive data to or from other users or other electronic devices through a connected network or another network linked to the connected network.

The network interface 135 may receive web content or data provided by a content provider or a network operator. That is, the network interface 135 may receive the web content or data, such as movies, advertisements, games, VOD, broadcast signals, etc., as well as information related thereto, which are provided by content providers or network providers through the network.

The network interface 135 may receive update information and an update file of firmware which are provided by network operators, and may transmit data to internet or content providers or network operators.

The network interface 135 may select a desired application from among a plurality of applications open to the public, and may receive the selected application through a network.

The memory 140 may store programs for processing and controlling each signal within the controller 180, and may store signal-processed video, audio or data signals. For example, the memory 140 may store applications designed to perform various operations which may be processed by the controller 170, and in response to a request from the controller 170, the memory 140 may selectively provide some of the stored applications.

The programs and the like stored in the memory 140 are not particularly limited, as long as the programs may be executed by the controller 170.

The memory 140 may also perform the function of temporarily storing video, audio or data signals received from an external device through the external device interface 130.

The memory 140 may store information on predetermined broadcast channels through a channel memory function, such as channel map and the like.

While FIG. 2 illustrates an example in which the memory 140 is provided separately from the controller 170, the scope of the present disclosure is not limited thereto, and the memory 140 may be included in the controller 170.

The memory 140 may include at least one of a volatile memory (e.g., DRAM, SRAM, SDRAM, etc.) and a non-volatile memory (e.g., flash memory, hard disk type memory (HDD), solid-state drive (SSD), etc.). In various embodiments of the present disclosure, the memory 140 and the memory may be used interchangeably.

The user input interface 150 may transmit a signal, input by a user, to the controller 170 or may transmit a signal, input from the controller 170, to the user.

For example, the user input interface 150 may transmit/receive a user input signal, such as power on/off, channel selection, screen setup, etc., to/from the remote controller 250, and may transmit a user input signal input through a local key (not shown), such as a power key, a channel key, a volume key, or a setup value, etc., to the controller 170, or may transmit a user input signal, input from a sensor unit (not shown), which senses a user's gesture, to the controller 170, or may transmit a signal from the controller 170 to the sensor unit.

The input device 160 may be provided on one side of a main body of the video display apparatus 100. For example, the input device 160 may include a touchpad, a physical button, and the like.

The input device 160 may receive various user commands associated with the operation of the video display apparatus 100, and may transmit a control signal corresponding to the input command to the controller 170.

The input device 160 may include at least one microphone (not shown), and may receive a user's speech through the microphone.

The controller 170 may include at least one processor, and by using the included processor, the controller 170 may control the overall operation of the video display apparatus 100. Here, the processor may be a general processor such as a central processing unit (CPU). Obviously, the processor may be a dedicated device, such as an ASIC, or other hardware-based processor.

The controller 170 may demultiplex the stream signal received from the tuner 110, the demodulator 120, the external device interface 130, or the network interface 135, or may process the demultiplexed signals to generate and output signals for outputting video or audio.

The display 180 may convert a video signal, a data signal, an OSD signal, and a control signal processed by the controller 170 or a video signal, a data signal and a control signal received from the external device interface 130 to generate diving signals.

The display 180 may include a display panel (not shown) including a plurality of pixels.

The plurality of pixels included in the display panel may have RGB sub-pixels. Alternatively, the plurality of pixels included in the display panel may have RGBW sub-pixels. The display 180 may convert the video signal, data signal, OSD signal, control signal, and the like processed by the controller 170 to generate signals for driving the plurality of pixels.

The display 180 may be a Plasma Display Panel (PDP), a Liquid Crystal Display (LCD), an Organic Light Emitting Diode (OLED), a flexible display, or the like, and may also be a three-dimensional (3D) display. The 3D display 180 may be divided into an autostereoscopic display and a glasses-type display.

Further, the display 180 may be configured as a touchscreen to be used as an input device in addition to an output device.

The audio output device 185 may receive an audio signal processed by the controller 170, and outputs the audio signal in the form of sound.

The image signal processed by the controller 170 may be input to the display 180 to be displayed as an image corresponding to the image signal. Further, the image signal processed by the controller 170 may also be input to an external output device through the external device interface 130.

The audio signal processed by the controller 170 may be output in the form of sound to the audio output device 185. Further, the audio signal processed by the controller 170 may be input to an external output device through the external device interface 130.

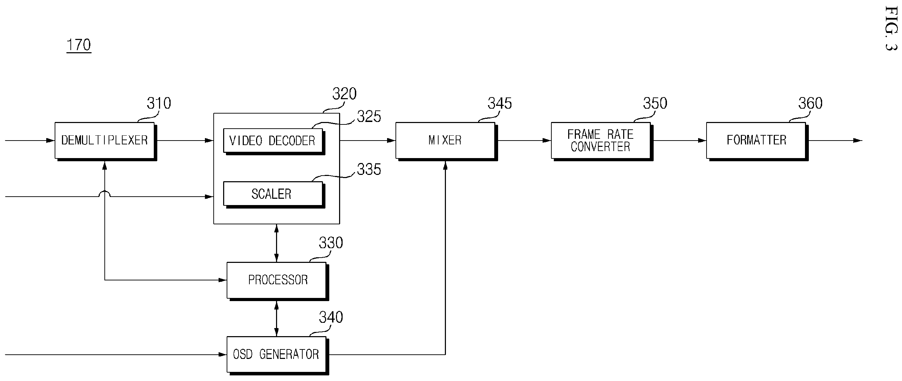

Although not illustrated in FIG. 2, the controller 170 may include a demultiplexer, a video processor, etc., which will be described later with reference to FIG. 3.

Besides, the controller 170 may control the overall operation of the video display apparatus 100. For example, the controller 170 may control the tuner 110 to tune into a broadcast channel selected by a user or a prestored channel.

In addition, the controller 170 may control the video display apparatus 100 according to a user command input through the user input interface 150 or an internal program.

Meanwhile, the controller 170 may control the display 180 to display images. Here, the images displayed on the display 180 may be still images or moving images and may be 2D images or 3D images.

Meanwhile, the controller 170 may control a predetermined 2D object to be displayed in an image displayed on the display 180. For example, the object may be at least one of an accessed web screen (newspaper, magazine, etc.), an electronic program guide (EPG), various menus, a widget, an icon, a still image, a moving image, and text.

Meanwhile, the video display apparatus 100 may further include a photographing unit (not shown). The photographing unit may photograph a user. The photographing unit may be implemented with one camera, but is not limited thereto, and may be implemented with a plurality of cameras. Further, the photographing unit may be embedded in the video display apparatus 100 at an upper portion of the display 180 or may be separately disposed. Image information photographed by the photographing unit may be input to the controller 170.

The controller 170 may determine a user's position, based on the image photographed by the photographing unit. For example, the controller 170 may determine a distance (z-axis coordinate) between the user and the video display apparatus 100. In addition, the controller 170 may identify x-axis coordinates and y-axis coordinates in the display 180 corresponding to the user's position.

The controller 170 may detect a user's gesture based on the image photographed by the photographing unit, each of signals detected by the sensor unit, or a combination thereof.

The power supply 190 may supply power throughout the video display apparatus 100. Particularly, the power supply 190 may supply power to the controller 170 implemented in the form of a system on chip (SOC), the display 180 for image display, the audio output device 185 for audio output, and the like.

Specifically, the power supply 190 may include a converter (not shown) for converting AC power into DC power, and a DC/DC converter (not shown) for changing a DC power level.

The remote controller 200 transmits a user input to the user input interface 150. To this end, the remote controller 200 may use Bluetooth, radio frequency (RF) communication, infrared (IR) communication, Ultra Wideband (UWB), ZigBee, and the like. Furthermore, the remote controller 200 may receive video, audio or data signals output from the user input interface 150, and may display the received signals or output the same in the form of sound through the remote controller 200.

Meanwhile, the aforementioned video display apparatus 100 may be a fixed type or movable digital broadcast receiver capable of receiving digital broadcast.

Meanwhile, the block diagram of the video display apparatus 100 illustrated in FIG. 2 is merely a block diagram for an embodiment of the present disclosure. Components of the block diagram may be integrated, added or omitted according to specifications of the actually implemented video display apparatus 100.

That is, two or more components may be combined or one component may be divided into two or more components as needed. Furthermore, a function executed in each block is for description of an embodiment of the present disclosure, and a specific operation or device of each block is not intended to limit the scope of the present disclosure.

FIG. 3 is an internal block diagram of the controller of FIG. 2.

Referring to FIG. 3, the controller 170 according to an embodiment of the present disclosure may include a demultiplexer 310, an image processor 320, a processor 330, an OSD generator 340, a mixer 345, a frame rate converter 350, and/or a formatter 360. Besides, the controller 170 may further include an audio processor (not shown) and a data processor (not shown).

The demultiplexer 310 demultiplexes the input stream. For example, when an MPEG-2 TS is input, the demultiplexer 310 may demultiplex the MPEG-2 TS into video, audio, and data signals, respectively. Here, the stream signal input to the demultiplexer 310 may be a stream signal output from the tuner unit 110, the demodulator 120, or the external device interface 130.

The image processor 320 may perform image processing on the demultiplexed video signal. To this end, the image processor 320 may include a video decoder 325 and a scaler 335.

The video decoder 325 decodes the demultiplexed video signal, and the scaler 335 performs scaling so that the resolution of the decoded video signal may be output to the display 180.

The video decoder 325 may include a decoder of various standards. For example, a 3D image decoder for MPEG-2, H.264 decoder, a color image, and a depth image, and a decoder for a multiple view image may be provided.

The processor 330 may control the overall operation of the image processing device 100 or the controller 170. For example, the processor 330 may control the tuner 110 to tune in to an RF broadcast channel selected by a user or a prestored channel.

In addition, the processor 330 may control the video display apparatus 100 by a user command input through the user input interface 150 or an internal program.

Further, the processor 330 may control data transmission with the network interface 135 or the external device interface 130.

Moreover, the processor 330 may control operations of the demultiplexer 310, the image processor 320, the OSD generator 340, and the like in the controller 170.

The OSD generator 340 generates an OSD signal according to a user input or by itself. For example, based on a user input signal input through the input device 160, the OSD generator 340 may generate a signal for displaying various types of information on the screen of the display 180 as a graphic or text, based on a user input signal input through the input device 160.

The generated OSD signal may include various data such as a user interface screen of the video display apparatus 100, various menu screens, a widget, and an icon. In addition, the generated OSD signal may include a 2D object or a 3D object.

In addition, the OSD generator 340 may generate a pointer that may be displayed on the display, based on a pointing signal input from the remote controller 200.

The OSD generator 340 may include a pointing signal processing unit (not shown) for generating a pointer. The pointing signal processing unit (not shown) may be provided separately, rather than being provided in the OSD generator 240.

The mixer 345 may mix an OSD signal generated by the OSD generator 340 with a decoded image signal image-processed by the image processor 320. The mixed image signal may be supplied to the frame rate converter 350.

The frame rate converter (FRC) 350 may convert the frame rate of an input image. Meanwhile, the frame rate converter 350 may also directly output the frame rate without additional frame rate conversion.

The formatter 360 may arrange a left-eye video frame and a right-eye video frame of the 3D video signal subjected to frame rate conversion. Further, a synchronization signal Vsync may be output for opening the left-eye glass and the right-eye glass of the 3D viewing device (not shown).

Meanwhile, the formatter 360 may convert the format of an input image signal into an image signal to be displayed and output on the display 180.

In addition, the formatter 360 may change the format of a 3D image signal. For example, the formatter 360 may change the format of the 3D image signal into any one of various 3D formats such as a side by side format, a top/down format, a frame sequential format, an interlaced format, a checker box format, and the like.

Meanwhile, the formatter 360 may convert a 2D video signal into a 3D video signal. For example, the formatter 360 may detect an edge or a selectable object from the 2D video signal and separate an object according to the detected edge or the selectable object as a 3D video signal to thereby generate the 3D video signal according to a 3D video generation algorithm. In this case, the generated 3D video signal may be separated into a left-eye video signal L and a right-eye video signal R and aligned as described above.

Meanwhile, although not illustrated herein, a 3D processor (not shown) for 3-dimensional (3D) effect signal processing may be further provided following the formatter 360. Such a 3D processor (not shown) may control brightness, tint and color of a video signal for 3D effect enhancement. For example, the 3D processor (not shown) may perform signal processing for making a close-range view clear and blurring a distant view. The function of the 3D processor may be integrated with the formatter 360 or the image processor 320.

Meanwhile, the audio processor (not shown) included in the controller 170 may process a demultiplexed audio signal. To this end, the audio processor (not shown) may include various decoders.

In addition, the audio processor (not shown) included in the controller 170 may control base, treble, volume, and the like.

The data processor (not shown) included in the controller 170 may process the demultiplexed data signal. For example, when the demultiplexed data signal is an encoded data signal, the encoded data signal may be decoded. The encoded data signal may be electronic program guide (EPG) information including broadcast information such as start time and finish time of a broadcast program that is broadcast through each channel.

Meanwhile, the block diagram of the controller 170 illustrated in FIG. 3 is merely a block diagram for an embodiment of the present disclosure, and components of the block diagram may be integrated, added, or omitted according to the specifications of the actually implemented controller 170.

Particularly, each of the frame rate converter 350 and the formatter 360 may be separately provided instead of being included in the controller 170, or may be provided separately as one module.

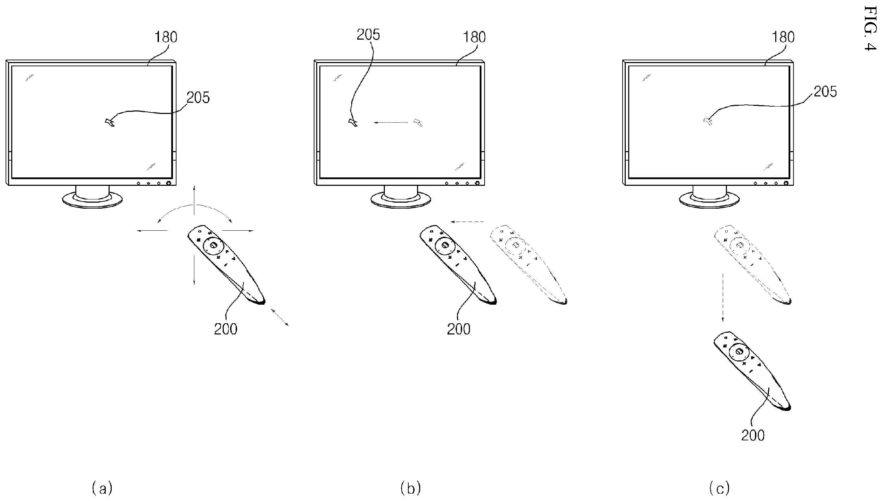

FIG. 4 is a diagram illustrating a method of controlling the remote controller of FIG. 2, and FIG. 4B is an exemplary internal block diagram of the remote controller of FIG. 2.

Referring to FIG. 4, it can be seen that a pointer 205 corresponding to the remote controller 200 is displayed on the display 180 of the video display apparatus 100.

Referring to (a) of FIG. 4, a user may move or rotate the remote controller 200 up and down, left and right, and back and forth. In this case, the pointer 205 displayed on the display 180 of the video display apparatus 100 may be displayed according to movement of the remote controller 200. The remote controller 200 may be referred to as a spatial remote controller or a 3D pointing device, because the pointer 205 corresponding thereto is moved and displayed according to movement in a 3D space, as illustrated in the drawing.

Referring to (b) of FIG. 4, it can be seen that when the user moves the remote controller 200 to the left, the pointer 205 displayed on the display 180 of the video display apparatus 100 also moves to the left according to the movement of the remote controller 200.

Information on movement of the remote controller 200 detected by a sensor of the remote controller 200 may be transmitted to the video display apparatus 100. The video display apparatus 100 may calculate coordinates of the pointer 205 based on the information on the movement of the remote controller 200. The video display apparatus 100 may display the pointer 205 corresponding to the calculated coordinates.

Referring to (c) of FIG. 4, a user moves the remote controller 200 away from the display 180 while pressing a specific button on the remote controller 200. Thus, a selected area on the display 180 corresponding to the points 205 may be zoomed in and thus magnified. On the contrary, when the user moves the remote controller 200 toward the display 180, a selected area on the display 180 corresponding to the points 205 may be zoomed out and thus reduced.

Meanwhile, when the remote controller 200 moves away from the display 180, the selected area may be zoomed out, and when the remote controller 200 approaches the display 180, the selected area may be zoomed in.

Meanwhile, when a user presses a specific button of the remote controller 200, up/down movement and left/right movement may not be recognized. That is, when the remote controller 200 moves away from or closer to the display 180, up/down movement and left/right movement may not be recognized, but only the forward/backward movement may be recognized. When the user does not press the specific button of the remote controller 200, only the up/down movement and left/right movement of the remote controller 200 may be recognized, and only the pointer 205 may move accordingly.

Meanwhile, a moving speed or moving direction of the pointer 205 may correspond to a moving speed or moving direction of the remote controller 200.

Meanwhile, the video display apparatus 100 may use a standard general-purpose Operating System (OS), but particularly, the video display apparatus 100 described in this specification uses a Web OS in one embodiment. Therefore, the video display apparatus 100 may perform processing operations, such as adding, deleting, amending, updating, and the like of various services and applications on general-purpose OS kernel or Linux kernel, thereby creating and providing a more user-friendly environment.

In addition, even when the following description is made using only applications, its meaning can include not only applications but also services based on the context and the like.

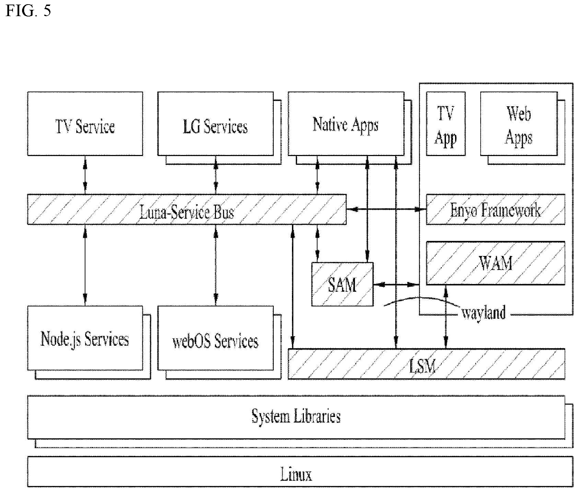

FIG. 5 is a diagram illustrating a Web OS architecture according to an embodiment of the present disclosure.

The architecture of a Web OS platform will be described below with reference to FIG. 5.

The platform may be largely divided into a kernel, a system library based Web OS core platform, an application, a service, etc.

The architecture of the Web OS platform has a layered structure, in which the OS is provided at a lowest layer, system library(s) are provided at a next highest layer, and applications are provided at the highest layer.

First, the lowest layer is an OS layer including a Linux kernel such that Linux is included as an OS of the video display apparatus 100.

A board support package (BSP)/hardware abstraction layer (HAL) layer, a Web OS core modules layer, a service layer, a Luna-service bus layer and an Enyo framework/native developer's kit (NDK)/QT layer are sequentially provided above the OS layer, and an application layer is provided at the highest layer.

Meanwhile, some layers of the above-described Web OS layered structure may be omitted, and a plurality of layers may be combined to one layer and one layer may be divided into a plurality of layers.

The Web OS core module layer may include a Luna surface manager (LSM) for managing a surface window, etc., a system & application manager (SAM) for managing execution and performance status of applications, etc., a web application manager (WAM) for managing web applications based on WebKit, and the like.

The LSM manages an application window displayed on a screen. The LSM may control display hardware (HW) and provide a buffer for rendering content necessary for applications, and compose and output results of rendering a plurality of applications on a screen.

The SAM manages policy according to several conditions of systems and applications.

The WAM is based on Enyo framework, because a Web OS regards a web application as a basic application.

An application may use a service via a Luna-service bus. A service may be newly registered via a bus and the application may detect and use a desired service.

The service layer may include services having various service levels, such as a TV service, a Web OS service, etc. The Web OS service may include a media server, Node.JS, etc. and, in particular, the Node.JS service supports, for example, JavaScript.

The Web OS service may perform communication with a Linux process implementing function logic via a bus. This Web OS service is largely divided into four parts, migrates from a TV process and an existing TV to a Web OS, is developed as services which differ between manufacturers, Web OS common services and JavaScripts, and is composed of the Node.js service used via Node.js.

The application layer may include all applications supportable by the video display apparatus 100, such as a TV application, a showcase application, a native application, a web application, etc.

Applications on the Web OS may be divided into a web application, a palm development kit (PDK) application, a Qt Meta Language or Qt Modeling Language (QML) application, etc. according to implementation methods.

The web application is based on a WebKit engine and is performed on WAM runtime. Such a web application is based on Enyo framework or may be developed and performed based on general HTML5, cascading style sheets (CSS) and JavaScripts.

The PDK application includes a native application developed with C/C++ based on a PDK provided for a third party or an external developer. The PDK refers to a set of development libraries and tools provided to enable a third party to develop a native application (C/C++) such as games and the like. For example, the PDK application may be used to develop applications requiring high performance.

The QML application is a Qt based native application and includes basic applications provided along with the Web OS platform, such as card view, home dashboard, virtual keyboard, etc. Here, QML is a markup language of a script format, instead of C++.

In the above description, the native application is an application which is developed and compiled using C/C++ and is executed in the binary form and has an advantage such as high execution speed.

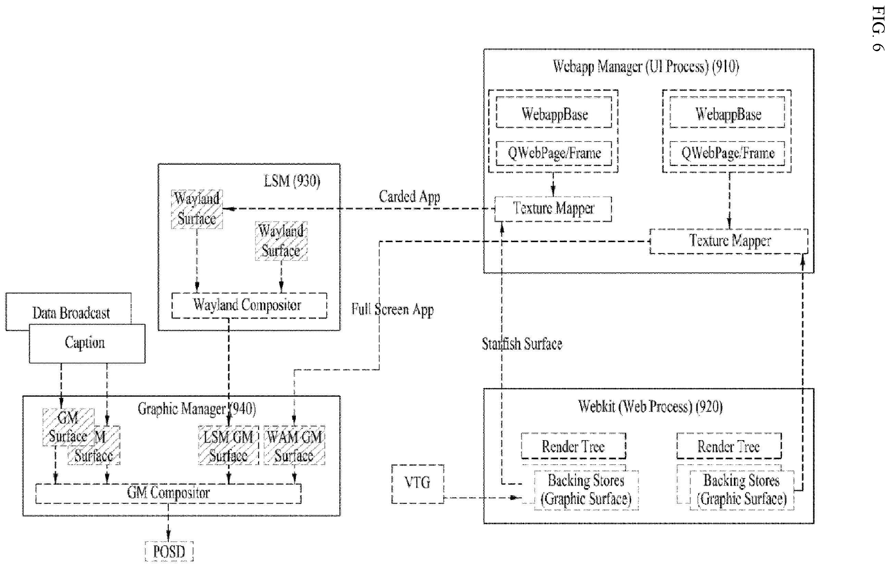

FIG. 6 is a diagram illustrating the architecture of a Web OS device according to an embodiment of the present disclosure.

FIG. 6 is a block diagram based on a runtime of a Web OS device and is described with reference to the layered structure of FIG. 5. Hereinafter, a description will be given with reference to FIGS. 5 and 6.

Referring to FIG. 6, services, applications, and Web OS core modules are included on a system OS (Linux) and system libraries and communication therebetween may be performed via a Luna-service bus.

Node.js services based on HTML5 such as e-mail, contact or calendar, CSS, JavaScript, etc., Web OS services such as logging, backup, file notify, database (DB), activity manager, system policy, audio daemon (AudioD), update, media server, etc., TV services such as electronic program guide (EPG), personal video recorder (PVR), data broadcasting, etc., CP services such as voice recognition, now on, notification, search, auto content recognition (ACR), contents list browser (CBOX), wfdd, DMR, remote application, download, Sony Philips digital interface format (SDPIF), etc., native applications such as PDK applications, browsers, QML applications, a UI-related TV applications based on Enyo framework and web applications are processed via Web OS core modules such as the above-described SAM, WAM and LSM via the Luna-service bus. In the above description, the TV applications and the web applications are not necessarily based on Enyo framework or related to UI.

The CBOX may manage metadata and lists of content of external devices such as USB drivers, DLNA devices or Cloud servers connected to a TV. The CBOX may output content listing of various content containers such as USB, DMS, DVR, Cloud server, etc. as an integrated view. In addition, the CBOX may display various types of content listings such as pictures, music, video, etc., and manage metadata thereof. Besides, the CBOX may output content of an attached storage in real time. For example, if a storage device such as a USB is plugged in, the CBOX may immediately output a content list of the storage device. In this case, a standardized method for processing the content listing may be defined. In addition, the CBOX may accommodate various connection protocols.

The SAM is used to improve module complexity and extensibility. For example, an existing system manager processes several functions, such as system UI, window management, web application runtime, UX constraint processing, etc., via one process and thus has high implementation complexity. In order to solve the problem, the SAM divides main functions and clarifies an interface between functions, thereby decreasing implementation complexity.

The LSM is supported to independently develop and integrate a system UX such as card view, launcher, etc., and to easily cope with change in product requirements. The LSM maximally uses hardware resources to enable multitasking if a plurality of application screens is composed using an app-on-app method and may provide a window management mechanism for 21:9 and a multi-window.

The LSM supports implementation of a system UI based on a QML and improves development productivity. QML UX may easily configure a view using a screen layout and UI components based on MVC and easily develop code for processing user input. An interface between the QML and the Web OS component is achieved via a QML extensibility plug-in and graphic operation of an application may be based on Wayland protocol, luna-service call, etc.

As described above, the LSM is an abbreviation for a Luna surface manager and functions as an application window compositor.

The LSM composes and outputs independently developed applications, UI components, and the like on a screen. In this regard, when components such as recent applications, showcase applications or launcher applications render respective content, the LSM defines an output area, a linkage method, and the like as a compositor. In other words, the LSM functioning as a compositor performs processing such as graphic composition, focus management, input events, etc. In this case, the LSM receives event, focus, and the like from an input manager, and a remote controller, a HID such as a mouse and keyboard, a joystick, a game pad, a remote application, a pen touch, and the like may be included as an input manager.

As described above, the LSM supports multiple window models and may be simultaneously executed in all applications as a system UI. In this regard, the LSM may support launcher, recents, setting, notification, system keyboard, volume UI, search, finger gesture, voice recognition (speech to text (STT), text to speech (TTS), natural language processing (NLP), etc.), pattern gesture (camera or mobile radio control unit (MRCU)), live menu, auto content recognition (ACR), etc.

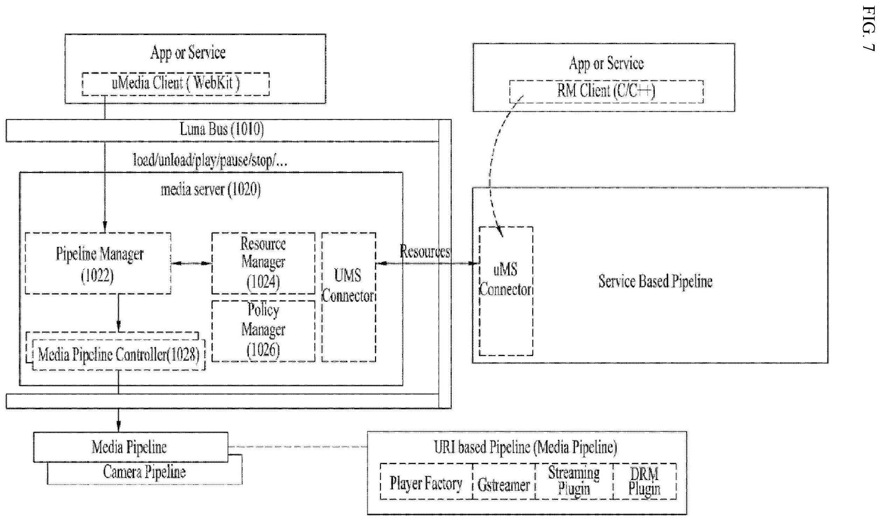

FIG. 7 is a diagram illustrating a graphic composition flow in a Web OS device according to an embodiment of the present disclosure.

Referring to FIG. 7, graphic composition processing may be performed via a web application manager 910 functioning as a UI process, a WebKit 920 functioning as a web process, an LSM 930 and a graphics manager (GM) 940.

When the web application manager 910 generates web application based graphics data (or application) as a UI process, the generated graphics data is delivered to the LSM if the graphics data is not a full-screen application. The web application manager 910 receives an application generated by the WebKit 920 in order to share a graphic processing unit (GPU) memory for graphic management between the UI process and the web process and delivers the application to the LSM 930 if the application is not a full-screen application. In the above description, if the application is the full-screen application, the LSM 930 may bypass the application. In this case, the application is directly delivered to the graphics manager 940.

The LSM 930 transmits the received UI application to a Wayland compositor via a Wayland surface and the Wayland compositor appropriately processes the UI application and delivers the processed UI application to the graphics manager. The graphics data received from the LSM 930 is delivered to the graphics manager compositor via, for example, the LSM GM surface of the graphics manager 940.

The full-screen application is directly delivered to the graphics manager 940 without passing through the LSM 930 as described above, and the application may be processed in the graphics manager compositor via the WAM GM surface.

The graphics manager processes all graphics data in the Web OS device, and receives and outputs data passing through the above-described LSM GM surface, data passing through a WAM GM surface, and graphics data passing through a GM surface, such as a data broadcasting application or a caption application, appropriately on a screen. Here, the function of the GM compositor is equal or similar to the above-described compositor.

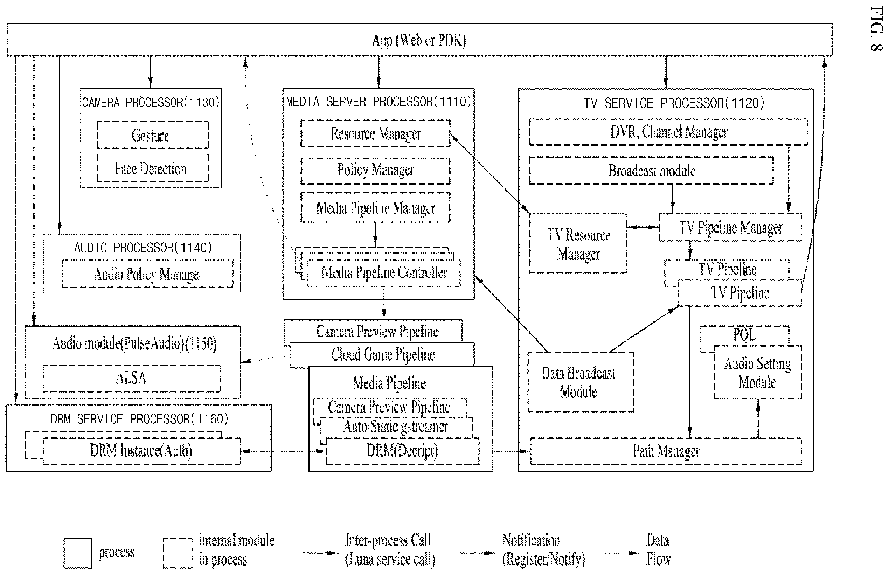

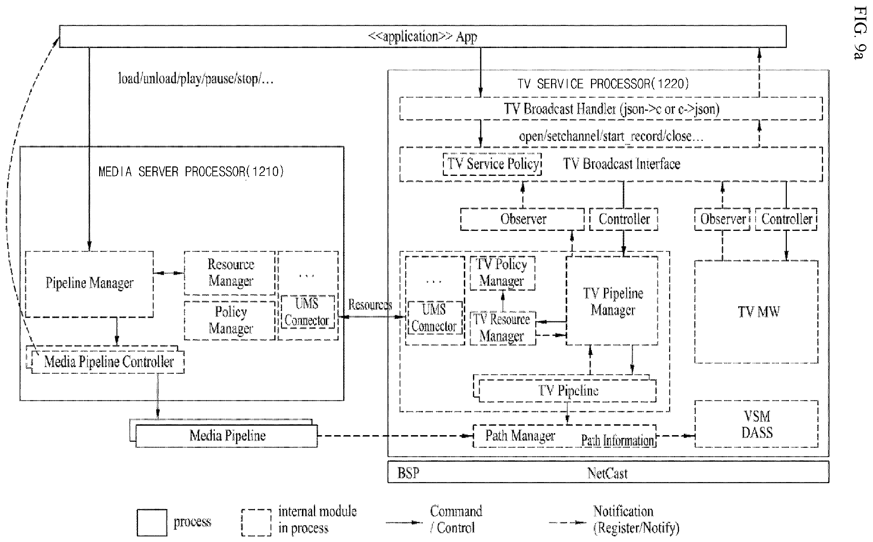

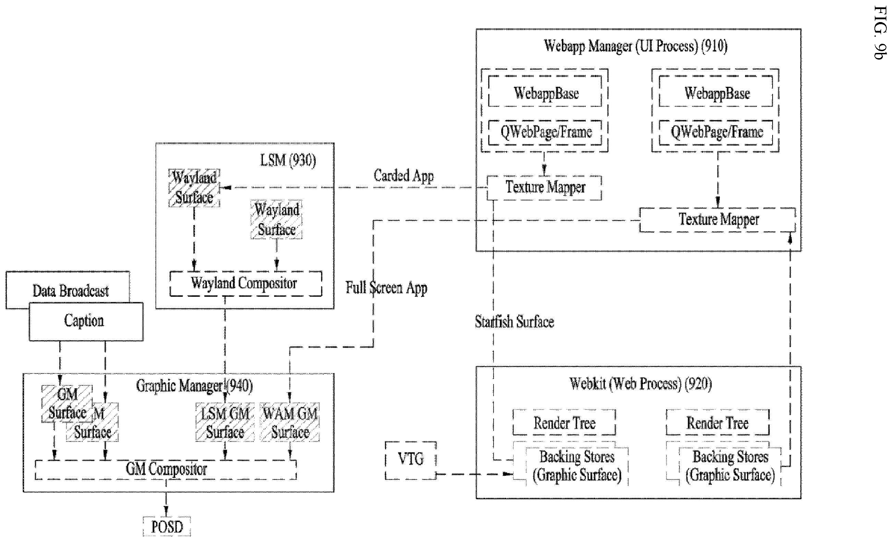

FIG. 8 is a diagram illustrating a media server according to an embodiment of the present disclosure. FIG. 9A is a block diagram illustrating a media server according to an embodiment of the present disclosure, and FIG. 9B is a diagram illustrating a relationship between a media server and a TV service according to an embodiment of the present disclosure.

The media server supports execution of a variety of multimedia in the video display apparatus 100 and manages necessary resources. The media server may efficiently use hardware resources necessary for media play. For example, the media server requires audio/video hardware resources for multimedia execution and efficiently manages a resource use status to efficiently use resources. In general, a stationary device having a screen larger than that of a mobile device requires more hardware resources upon multimedia execution and requires high encoding/decoding rate and graphics data transfer rate due to a large amount of data. The media server should perform not only streaming or file playback but also broadcasting, recording and tuning tasks, a task for simultaneously viewing and recording, and a task for simultaneous displaying a sender and a recipient on a screen upon video call. However, it is difficult for the media server to simultaneously perform several tasks due to restriction in hardware resources such as an encoder, a decoder, a tuner, a display engine, etc. in chipset units. For example, the media server restricts a use scenario or performs processing using user input.

The media server may make system stability robust, and may remove a playback pipeline, in which errors occur during media playback, per pipeline, such that other media play is not influenced even when errors occur. Such a pipeline is a chain for connecting unit functions, such as decoding, analysis, output, etc., upon a media playback request, and required unit functions may be changed according to media type and the like.

The media server may have extensibility and may add a new type of pipeline without affecting an existing implementation scheme. For example, the media server may accommodate a camera pipeline, a video conference (Skype) pipeline, a third-party pipeline, etc.

The media server may process general media playback and TV task execution as separate services because the interface of the TV service is different from that of media playback. In the above description, the media server supports operations, such as setchannel, channelup, channeldown, channeltuning, recordstart, etc., in relation to the TV service and supports operations, such as play, pause, stop, etc., in relation to general media playback, thereby supporting different operations for the two services and processing the two services as separate services.

The media server may control or manage a resource management function in an integrated manner. Hardware resource allocation, recovery, and the like in a device are performed in an integrated manner by the media server, and particularly, the TV service process delivers a currently running task, a current resource allocation status, and the like to the media server. The media server secures resources to execute a pipeline whenever media is executed, allows media execution due to priority (e.g., policy) upon media execution request, and performs resource recovery of another pipeline, based on a current resource status occupied by each pipeline. Here, the predefined execution priority and resource information necessary for a specific request are managed by a policy manager and the resource manager communicates with the policy manager to process resource allocation and recovery.

The media server may have identifiers (IDs) for all operations related to playback. For example, the media server may send a command by indicating a specific pipeline based on the ID. The media server may send respective commands to pipelines for playback of two or more media.

The media server is responsible for playing back a HTML5 standard media.

Besides, the media server performs a service process of a TV pipeline according to a TV restructuralization range. The media server may be designed and implemented regardless of the TV restructuralization range. If the separate service process of the TV is not performed, the TV may be wholly re-executed when errors occurs in a specific task.

The media server is also referred to as uMS, that is, a micro media server. Here, the media player is a media client, which may mean, for example, WebKit for HTML5 video tag, camera, TV, Skype or second screen.

The media server may manage micro resources such as a resource manager, a policy manager, etc. In this regard, the media server also controls playback of web standard media content. In this regard, the media server may manage pipeline controller resources.

The media server may support, for example, extensibility, reliability, efficient resource usage, etc.

In other words, the uMS, that is, the micro media server, manages and controls resource usage for appropriate processing within the Web OS device, such as resources including cloud game, MVPD (pay service, etc.), camera preview, second screen or Skype, and TV resources. For example, a pipeline is used upon usage of each resource, and the media server may manage and control generation, deletion, and use of a pipeline for resource management.

Here, the pipeline may be generated when, for example, a media related to a task starts a sequence of operations such as parsing of request, decoding stream, video output, etc. For example, in association with a TV service and an application, watching, recording, channel tuning, etc. are controlled and performed via pipelines individually generated according to requests thereof with respect to resource usage.

Referring to FIG. 8, a processing structure of a media server will be described below in further detail.

In FIG. 8, an application or service is connected to a media server 1020 via a Luna-service bus 1010 and the media server 1020 is connected to and managed by pipelines generated via the Luna-service bus 1010.

The application or service includes various clients according to properties thereof and may exchange data with the media server 1020 or the pipeline via the clients.

The clients may include, for example, a uMedia client (WebKit) for connection with the media server 1020 and a resource manager (RM) client (C/C++).

The application including the uMedia client is connected to the media server 1020 as described above. More specifically, the uMedia client corresponds to, for example, a video object which will be described below, and the client may use the media server 1020 for video operation by a request and the like.

Here, the video operation relates to a video status and may include all status data related to the video operation, such as loading, unloading, play (playback or reproduction), pause, stop, etc. Such video operations or statuses may be processed by generating individual pipelines. Accordingly, the uMedia client transmits status data related to the video operation to the pipeline manager 1022 in the media server.

The pipeline manager 1022 acquires information about resources of the current device via data communication with the resource manager 1024 and requests allocation of resources corresponding to the status data of the uMedia client. In this case, the pipeline manager 1022 or the resource manager 1024 controls resource allocation via data communication with the policy manager 1026 if necessary. For example, if resources to be allocated by the resource manager 1024 in response to the request of the pipeline manager 1022 are not present or are insufficient, resource allocation may be appropriately performed according to priority comparison of the policy manager 1026.

Meanwhile, the pipeline manager 1022 may request the media pipeline controller 1028 to generate a pipeline for operation according to the request of the uMedia client for resources allocated according to resource allocation of the resource manager 1024.

The media pipeline controller 1028 generates a necessary pipeline under control of the pipeline manager 1022. As illustrated herein, regarding the generated pipelines, pipelines related to play, pause, stop and the like may be generated as well as a media pipeline and a camera pipeline. The pipeline includes pipelines for HTML5, web CP, Smarthshare playback, thumbnail extraction, NDK, cinema, Multimedia and Hypermedia Information coding Experts Group (MHEG), etc.

Besides, the pipelines may include, for example, a service-based pipeline (self-pipeline) and a URI based pipeline (media pipeline).

Referring to FIG. 8, the application or service including the RM client cannot be directly connected to the media server 1020. This is because the application or service may directly process a media. In other words, if the application or service directly processes a media, the media server may be bypassed. In this case, resource management is necessary for pipeline generation and usage, such that a uMS connector may function for it. When a resource management request for direct media processing of the application or service is received, the uMS connector communicates with the media server 1020 including the resource manager 1024. To this end, the media server 1020 may also include a uMS connector.

Accordingly, the application or service may cope with the request of the RM client by resource management of the resource manager 1024 via the uMS connector. The RM client may process services such as native CP, TV service, second screen, flash player, You Tube media source extensions (MSE), cloud game, Skype, etc. In this case, as described above, the resource manager 1024 may manage resources by appropriate data communication with the policy manager 1026 if required for resource management.

The URI based pipeline does not directly process the media as in the case of the above-RM client, but processes the media via the media server 1020. The URI based pipeline may include player factory, Gstreamer, streaming plug-in, digital rights management (DRM) plug-in pipelines, etc.

Meanwhile, an interface method between the application and the media services is as follows.

An interface method using a service in a web application may be used. In this method, a Luna call method using a palm service bridge (PSB) and a method of using Cordova may be used, in which a display is extended with a video tag. Besides, a method of using HTML5 standard related to a video tag or media element may be used.

Further, an interface method using a service in PDK may be used.

Alternatively, there is a method of using a service in an existing CP. For backward compatibility, plug-in of an existing platform may be extended and used based on Luna.

Lastly, there is an interface method using a non-Web OS. In this case, a Luna bus may be directly called to perform interfacing.

Seamless change is processed by a separate module (e.g., TVWIN) and refers to a process of first displaying a TV program on a screen without a Web OS before or during Web OS booting, and then performing seamless processing. Since a booting time of Web OS is long, this may be used for the purpose of first providing basic functions of a TV service for fast response to a user's power-on request. In addition, the module is a part of a TV service process and supports seamless change for providing fast booting and basic TV functions, factory mode, etc. Further, the module may also handle switching from the non-Web OS mode to the Web OS mode.

Referring to FIG. 9A, a processing structure of a media server is illustrated.

In this case, in FIG. 9A, a solid box denotes a process component and a dotted box denotes an internal processing module of the process. In addition, a solid arrow denotes an inter-process call, that is, a Luna-service call and a dotted arrow denotes notification such as register/notify or data flow.

The service, the web application or the PDK application (hereinafter, referred to as "application") is connected to various service processing components via a Luna-service bus and is operated or controlled via the service processing components.

A data processing path may vary according to application type. For example, if the application includes image data related to a camera sensor, the image data may be transmitted to a camera processor 1130 for processing. In this case, the camera processor 1130 includes a gesture or face detection module and processes the received image data of the application. Here, the camera processor 1130 may generate a pipeline via a media server processor 1110 for data that requires use of a pipeline according to user selection or automatically, and may process the data.

Alternatively, if the application includes audio data, the audio may be processed by an audio processor (AudioD) 1140 and an audio module (PulseAudio) 1150. For example, the audio processor 1140 processes the audio data received from the application and transmits the processed audio data to the audio module 1150. In this case, the audio processor 1140 may include an audio policy manager to determine processing of the audio data. The processed audio data is processed by the audio module 1160. The application may notify the audio module 1160 of data related to audio data processing, and a pipeline related thereto may also notify the audio module 1160. The audio module 1150 includes advanced Linux sound architecture (ALSA).

Alternatively, if the application includes or processes (hereinafter, referred to as "includes") content subjected to DRM, the content data is transmitted to a DRM service processor 1160, and the DRM service processor 1170 generates a DRM instance and processes the content data subjected to DRM. The DRM service processor 1160 is connected to a DRM pipeline in a media pipeline via a Luna-service bus, for processing of the content data subjected to DRM.

Hereinafter, processing of an application including media data or TV service data (e.g., broadcast data) will be described.

FIG. 9B is a diagram explaining only the media server processor and the TV service processor of FIG. 9A in further detail.

First, if the application includes TV service data, it is processed by the TV service processor 1120/1220.

Here, the TV service processor 1120 includes, for example, at least one or more of a DVR/channel manager, a broadcast module, a TV pipeline manager, a TV resource manager, a data broadcast module, an audio setting module, a path manager, etc. Alternatively, in FIG. 9B, the TV service processor 1220 may include a TV broadcast handler, a TV broadcast interface, a service processor, TV middleware (MW), a path manager and a BSP (e.g., NetCast). Here, the service processor may refer to a module including, for example, a TV pipeline manager, a TV resource manager, a TV policy manager, a USM connector, etc.

In the present disclosure, the TV service processor may have the configuration of FIG. 9A or FIG. 9B or a combination thereof, and in the above description, some components may be omitted or other components not shown may be added.

Based on attribute or type of the TV service data received from the application, the TV service processor 1120/1220 transmits Digital Video Recorder (DVR) or channel related data to a DVR/channel manager and also transmits the DVR or channel related data to the TV pipeline manager to generate and process a TV pipeline. If the attribute or type of the TV service data is broadcast content data, the TV service processor 1120 generates and processes a TV pipeline via the TV pipeline manager, for processing of the data via a broadcast module.

Alternatively, a JavaScript standard object notation (json) file or a file written in c is processed by the TV broadcast handler and transmitted to the TV pipeline manager via a TV broadcast interface to generate and process a TV pipeline. In this case, the TV broadcast interface may transmit the data or file, passing through the TV broadcast handler, to the TV pipeline manager based on TV service policy and may refer to the data or file upon generating a pipeline.

Meanwhile, the TV pipeline manager generates one or more pipelines according to a request for generating a TV pipeline from the processing module or manager of the TV service processor, under control of the TV resource manager. The TV resource manager may be controlled by the TV policy manager, in order to request status and allocation of resources allocated for the TV service in response to a request for generating a TV pipeline from the TV pipeline manager, and may perform data communication with the media server processor 1110/1210 via a uMS connector. The resource manager in the media server processor 1110/1210 sends the status and allocation of resources allocated for the current TV service in response to the request of the TV resource manager. For example, if the resource manager in the media server processor 1110/1210 determines that the resources for the TV service are already allocated, the TV resource manager may be notified that allocation of all current resources is completed. In this case, the resource manager in the media server processor may request generation of a TV pipeline for the requested TV service or assign a TV pipeline by removing a predetermined TV pipeline from TV pipelines already assigned for the TV service along with the notification according to a predetermined criterion or priority. Alternatively, the TV resource manager may appropriately remove a TV pipeline or may add or newly establish a TV pipeline according to a status report of the resource manager in the media server processor 1110/1210.

The BSP supports, for example, backward compatibility with an existing digital device.

The generated TV pipelines may appropriately operate under control of the path manager in the processing procedure. The path manager may determine or control the processing path or procedure of the pipelines in consideration of the TV pipeline in the processing procedure and the operation of the pipelines generated by the media server processor 1110/1210.

Next, if the application includes media data, rather than TV service data, the application is processed by the media server processor 1110/1210. Here, the media server processor 1110/1210 includes a resource manager, a policy manager, a media pipeline manager, a media pipeline controller, etc. As pipelines generated under control of the media pipeline manager and the media pipeline controller, a camera preview pipeline, a cloud game pipeline, a media pipeline, and the like may be generated. The media pipeline may include streaming protocol, auto/static gstreamer, DRM, etc., and the processing flow thereof may be determined under control of the path manager. The above description of FIG. 7 also applies to a specific processing procedure in the media server processor 1110/1210, and redundant description thereof will be omitted.

In the present disclosure, the resource manager in the media server processor 1110/1210 may perform, for example, resource management with a counter base.

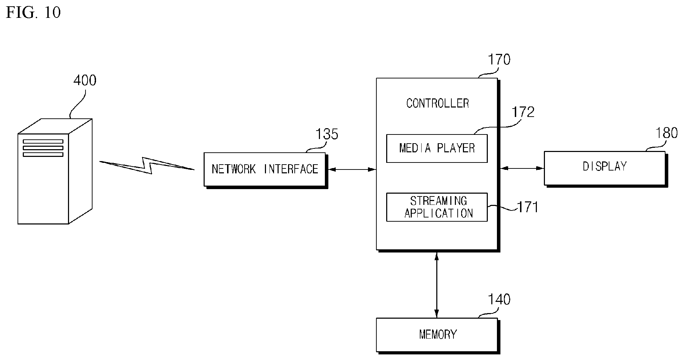

FIG. 10 is an internal block diagram of a video display apparatus according to an embodiment of the present disclosure. Descriptions of elements that have already been described above with reference to FIGS. 1 through 9B will be omitted.

Referring to FIG. 10, the video display apparatus 100 may receive content from a server 400 by using adaptive bitrate streaming.

Adaptive bitrate streaming refers to a method of delivering partial content having picture quality that can be handled by a bandwidth of a client side (e.g., receiving side) based on network status or transmission rate.

The server 400 may encode content to be streamed into stream segments of several bitrates. For example, if the server 400 desires to serve one-minute content by using adaptive bitrate streaming, the server 400 may divide a full-length stream into stream segments of 2 to 10 seconds, and encode the divided stream segments at three different bitrates and store the encoded stream segments. Each bitrate may correspond to the resolution of content. That is, the stream segments encoded at a high bitrate may mean that the resolution of video data within the stream segments is high.

Types of such adaptive bitrate streaming protocols include MPEG-DASH (Dynamic Adaptive Streaming over HTTP), Adobe Dynamic Streaming for Flash (HDS), QuavStreams Adaptive Streaming over HTTP, Apple HTTP Adaptive Streaming for iPhone/iPad/STB (HLS), Microsoft Smooth Streaming, upLynk, etc.

The controller 170 of the video display apparatus 100 may include a streaming application 171 and/or a media player 172.

The streaming application 171 may be an application that provides a streaming service. A streaming service corresponding to the streaming application 171 may be a service using adaptive bitrate streaming.

The media player 172 may be a pipeline managed by a media server 1020. The media player 172 may be a media pipeline.

When the streaming application 171 is executed, the video display apparatus 100 may output a screen, corresponding to the streaming service, through the display 180. The screen corresponding to the streaming service may include content provided through the streaming service. In this case, if one of content items provided through the streaming service is selected by user input, the video display apparatus 100 may perform an operation related to streaming of the selected specific content.

The streaming application 171 may generate the media player 172 for streaming specific content. For example, the streaming application 171 may request the media server 1020 to generate the media player 172 corresponding to the specific content. In this case, the media server 1020 may generate the media player 172 corresponding to the specific content in response to a request received from the streaming application 171.

The streaming application 171 may delete the media player 172 for streaming specific content. For example, if playback of the specific content is ended, the streaming application 171 may request the media server 1020 to delete the media player 172 for streaming the specific content. In this case, the media server 1020 may delete the media player 172 corresponding to the specific content in response to the request received from the streaming application 171.

The media player 172 may transmit and receive data with the server 400 through the network interface 135.

The media player 172 may receive metadata, including information on the encoded stream segments, from the server 400. The metadata may include a manifest file. The manifest file may include information on types of bitrates of the stream segments, a method of identifying the stream segments, location of the stream segments on the network, etc. In the following description, a bitrate used to receive a stream segment may be referred to as a target bitrate.

The media player 172 may request the server 400 to transmit a stream segment corresponding to the target bitrate. For example, the media player 172 may set one of a plurality of bitrates as the target bitrate based on the manifest file. In this case, the media player 172 may request the server 400 to transmit the stream segment corresponding to the target bitrate.

The media player 172 may receive the stream segment corresponding to the target bitrate from the server 400. The media player 172 may process the stream segment received from the server 400. A video signal corresponding to the stream segment processed by the media player 172 may be transmitted to the display 100. The display 100 may output a video of specific content based on the video signal corresponding to the stream segment processed by the media player 172.

The media player 172 may determine the target bitrate. The media player 172 may calculate a bitrate corresponding to reception of the stream segment (hereinafter referred to as a download bitrate). The media player 172 may calculate the download bitrate based on a network bandwidth and network throughput, etc. For example, the media player 172 may calculate a current bandwidth based on a size of data received from the server 400 and time taken to receive the data, etc.

The media player 172 may calculate the download bitrate by using an Adaptive BitRate (ABR) algorithm. The media player 172 may determine the target bitrate by comparing the bitrate included in the manifest file with the download bitrate.

The media player 172 may transmit the download bitrate to the streaming application 171. For example, the media player 172 may transmit a most recently calculated download bitrate to the streaming application 171.

In one embodiment, the media player 172 may transmit the download bitrate to the streaming application 171 based on a result of comparison between an average value of a predetermined number of recently calculated download bitrates and the most recently calculated download bitrate. If the most recently calculated download bitrate is greater than or equal to the average value of the predetermined number of recently calculated download bitrates, for example, if the most recently calculated download bitrate is 1.6 Mbps, and the average value of three recently calculated download bitrates is 1.0 Mbps, the media player 172 may transmit the most recently calculated download bitrate to the streaming application 171. If the most recently calculated download bitrate is less than the average value of the predetermined number of recently calculated download bitrates, for example, if the most recently calculated download bitrate is 1.0 Mbps, and the average value of three recently calculated download bitrates is 1.3 Mbps, the media player 172 may transmit the average value of three recently calculated download bitrates to the streaming application 171. In this manner, when the resolution of content streamed in real time is changed, reliability of the download bitrate transmitted to the streaming application 171 may be further improved.

The streaming application 171 may manage the download bitrate transmitted from the media player 172. The streaming application 171 may determine a representative value of bitrates based on the download bitrate transmitted from the media player 172. Here, the representative value may include a mean or average value, a median value, a mode value, etc. For example, the streaming application 171 may calculate an average value of bitrates based on the download bitrate transmitted from the media player 172 and the number of times the download bitrate is transmitted from the media player 172 (hereinafter referred to as the number of updates).

The streaming application 171 may update data about the download bitrate stored in the memory 140 (hereinafter referred to as bitrate data). For example, the streaming application 171 may add the representative value of bitrates and the number of updates to the bitrate data. For example, the streaming application 171 may calculate the overall representative value and the total number of updates based on the representative value of bitrates and the number of updates, included in the bitrate data stored in the memory 140, and the representative value of bitrates and the number of updates calculated by the streaming application 171. In this case, the streaming application 171 may change the representative value of bitrates and the number of updates, included in the bitrate data stored in the memory 140, to the overall representative value and the total number of updates.

When generating the media player 172, the streaming application 171 may transmit a bitrate to the generated media player 172. For example, if there is no representative value of the currently calculated bitrate, the streaming application 171 may transmit, to the media player 172, the representative value of bitrates included in the bitrate data stored in the memory 140. For example, if there is a representative value of the currently calculated bitrate, the streaming application 171 may transmit the representative value of the calculated bitrate to the media player 172.

The media player 172 may set a target bitrate based on the bitrate transmitted from the streaming application 171. For example, the media player 172 may determine, as the target bitrate, a highest bitrate among bitrates less than the bitrate transmitted from the streaming application 171 and included in the manifest file.

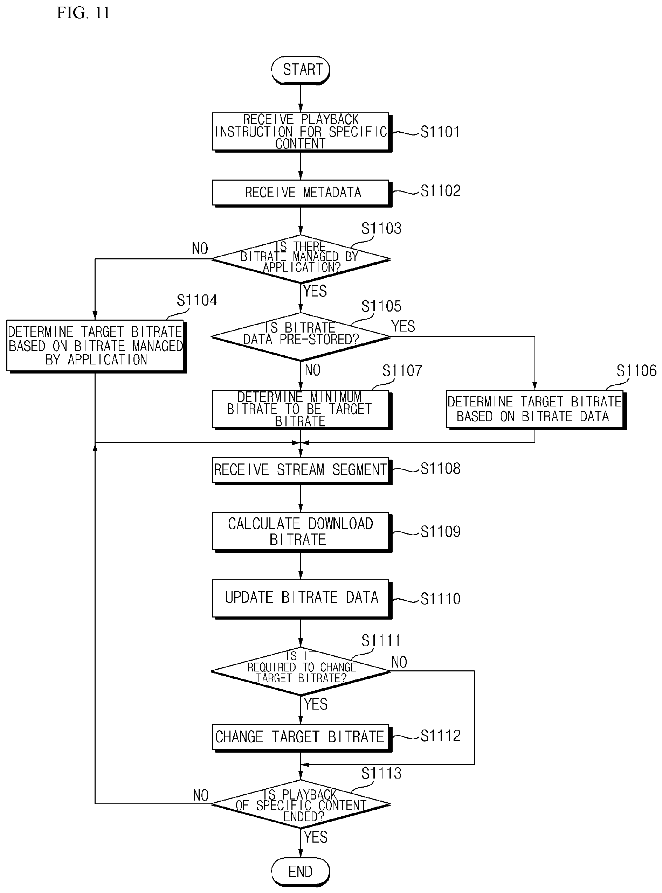

FIG. 11 is a flowchart illustrating a method of operating a video display apparatus according to an embodiment of the present disclosure.

Referring to FIG. 11, the video display apparatus 100 may receive a playback instruction for specific content in operation S1101. For example, based on execution of the streaming application 171, the video display apparatus 100 may output a screen corresponding to a streaming service through the display 180. In this case, if one of content items provided through the streaming service is selected by a user using a remote controller 200, the video display apparatus 100 may receive the playback instruction for the specific content from the remote controller 200.

Based on reception of the playback instruction for the specific content, the video display apparatus 100 may generate the media player 172 for streaming the specific content.

The video display apparatus 100 may receive metadata associated with the specific content in operation S1102. For example, the media player 172 may request the server 400 to transmit the metadata associated with the specific content. In this case, in response to the request received from the video display apparatus 100, the server 400 may transmit the metadata associated with the specific content to the video display apparatus 100. In the present disclosure, the manifest file includes bitrates of 700 kbps, 1.5 Mbps, and 3 Mbps as an example.

The video display apparatus 100 may determine whether there is a bitrate managed by the streaming application 171 in operation S1103. The bitrate managed by the streaming application 171 may be a representative value of bitrates calculated by the streaming application 171.

If there is the bitrate managed by the streaming application 171, the video display apparatus 100 may determine a target bitrate based on the bitrate managed by the streaming application 171 in operation S1104. For example, the media player 172 may determine the target bitrate based on the representative value of bitrates calculated by the streaming application 171. In the case of using the bitrate managed by the streaming application 171, it is possible to set a target bitrate that is more optimized for the current network environment.

If there is no bitrate managed by the streaming application 171, the video display apparatus 100 may determine whether bitrate data is stored in the memory 140 in operation S1105.

If the bitrate data is stored in the memory 140, the video display apparatus 100 may determine the target bitrate based on the bitrate data in operation S1106. For example, the media player 172 may determine the target bitrate based on the representative value of bitrates included in the bitrate data.

If the bitrate data is not stored in the memory 140, the video display apparatus 100 may determine a minimum bitrate to be the target bitrate in operation S1107. Here, the minimum bitrate may be a lowest bitrate among the bitrates included in the manifest file.

The video display apparatus 100 may receive a stream segment corresponding to the target bitrate from the server 400 in operation S1108. In this case, the video display apparatus 100 may process the stream segment received from the server 400 and output a video of specific content.

The video display apparatus 100 may calculate a download bitrate in operation S1109. For example, the media player 172 may calculate the download bitrate by using the ABR algorithm.

The video display apparatus 100 may update the bitrate data stored in the memory 140 in operation S1110. For example, the media player 172 may determine a representative value of bitrates based on the download bitrate transmitted from the media player 172. In this case, the media player 172 may update the bitrate data stored in the memory 140 based on the representative value of the calculated bitrates and the number of updates.

The video display apparatus 100 may determine whether it is required to change the target bitrate in operation S1111. For example, if the download bitrate is greater than or equal to 3 Mbps or less than 1.5 Mbps when the target bitrate is set to 1.5 Mbps, the video display apparatus 100 may determine that it is required to change the target bitrate.

If it is required to change the target bitrate, the video display apparatus 100 may change the target bitrate in operation S1112. For example, if the download bitrate is greater than or equal to 3 Mbps, the video display apparatus 100 may change the target bitrate to 3 Mbps. For example, if the download bitrate is less than 1.5 Mbps, the video display apparatus 100 may change the target bitrate to 700 kbps.

The video display apparatus 100 may determine whether playback of specific content is ended in operation S1113. For example, if the execution of the streaming application 171 is terminated, the video display apparatus 10 may end the playback of the specific content. For example, if a streaming target is changed to a content item different from the specific content, the video display apparatus 100 may end the playback of the specific content.

If playback of the specific content is ended, the media player 172 for streaming the specific content may be deleted. In addition, when the execution of the streaming application 171 is terminated, the bitrate managed by the streaming application 171 may be deleted.

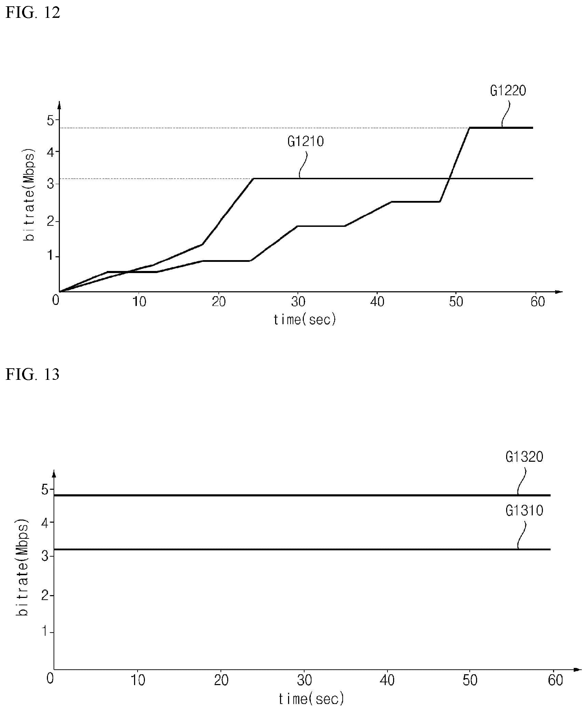

FIGS. 12 and 13 are graphs of bitrates for receiving stream segments, according to an embodiment of the present disclosure.

Referring to FIG. 12, according to an existing adaptive bitrate streaming scheme, at the beginning playback of first content, a minimum bitrate corresponding to the first content may be set to a target bitrate G1210 for the first content.

The target bitrate G1210 for the first content may increase stepwise. The target bitrate G1210 for the first content may be set to 3 Mbps, and then maintained, based on a network bandwidth and network throughput, etc. That is, after the target bitrate G1210 for the first content increases to 3 Mbps, a video of the first content may be output with optimal quality through the display 180.

If a streaming target is changed from the first content to second content, a target bitrate G1220 for the second content may be set to a minimum bitrate corresponding to the second content. As a result, the quality of a video output through the display 180 may be changed from high quality to low quality.

The target bitrate G1220 for the second content may increase stepwise. The target bitrate G1220 for the second content may be set to 5 Mbps, and then maintained, based on a network bandwidth and network throughput, etc. That is, after the target bitrate G1220 for the second content increases to 5 Mbps, a video of the second content may be output with optimal quality through the display 180.

Referring to FIG. 13, according to an embodiment of the present disclosure, a target bitrate G1310 for first content may be set to 3 Mbps from the beginning of playback of the first content, based on the bitrate data stored in the memory 140. As a result, a video of the first content may be output with optimal quality through the display 180 from the beginning of playback of the first content.

In addition, if a streaming target is changed from the first content to second content, the target bitrate G1220 for the second content may be set to 5 Mbps based on the bitrate managed by the streaming application 171. As a result, even when the streaming target is changed to the second content, a video of the second content may be output with optimal quality through the display 180 from the beginning of playback of the second content.

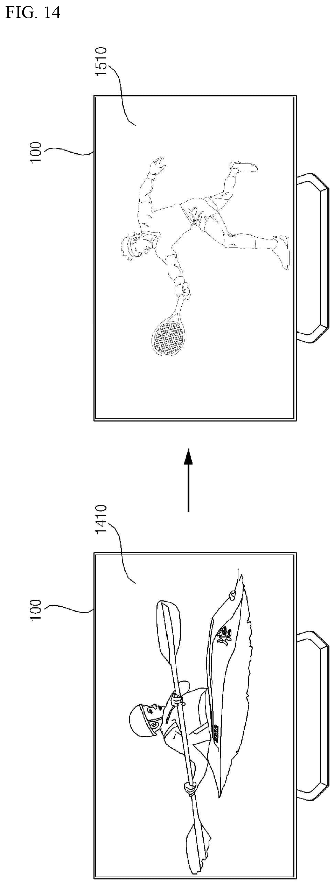

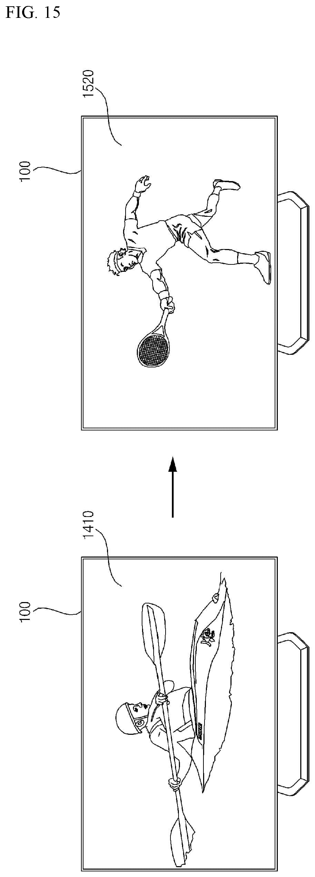

FIGS. 14 and 15 are diagrams illustrating a screen output through a video display apparatus according to an embodiment of the present disclosure.

Referring to FIG. 14, according to an existing adaptive bitrate streaming scheme, a streaming target may be changed from first content to second content while a video 1410 of the first content of high quality is output through the display 180 of the video display apparatus 100. In this case, a target bitrate for the second content is set to a minimum bitrate corresponding to the second content, such that a video 1510 of the second content of low quality may be output through the display 180.

Unlike the above example, referring to FIG. 15, according to an embodiment of the present disclosure, even when a streaming target is changed from the first content to the second content while the video 1410 of the first content of high quality is output, the target bitrate for the second content is set to an optimal bitrate corresponding to the second content, such that a video 1520 of the second content of high quality may be output through the display 180.

As described above, according to at least one of the embodiments of the present disclosure, a high-quality video may be provided from the beginning in the case of using adaptive bitrate streaming.

In addition, according to at least one of the embodiments of the present disclosure, a bitrate optimized for a network environment where content is provided may be selected from the beginning in the case of using adaptive bitrate streaming.

Referring to FIGS. 1 to 15, according to an embodiment of the present disclosure, a video display apparatus 100 includes: a network interface 135 configured to communicate with a server 400 that provides a stream segment using Adaptive Bitrate Streaming; a display 180; a memory 140 configured to store bitrate data; and a controller 170 configured to output a video, corresponding to the stream segment, through the display 180, wherein the controller 150 is configured to determine whether there is a first bitrate managed by the controller 170 in response to a streaming target being set, determine a target bitrate based on the first bitrate in response to there being the first bitrate, determine the target bitrate based on a second bitrate included in the bitrate data in response to there not being the first bitrate, and request the server 400 to transmit a stream segment corresponding to the target bitrate.

In addition, according to an embodiment of the present disclosure, in response to the bitrate data not being stored in the memory 140, the controller 170 may be configured to determine, as the target bitrate, a third bitrate which is a minimum value among at least one bitrate included in metadata received from the server 400.

In addition, according to an embodiment of the present disclosure, the controller 170 may include an application 171 configured to provide a streaming service, wherein in response to predetermined content being set as the streaming target, the application 171 may be configured to generate a media player 172 corresponding to the predetermined content, and in response to playback of the predetermined content being ended, configured to delete the media player 172, wherein the media player 172 may be configured to request the server 400 to transmit a stream segment corresponding to the target bitrate and process the stream segment received from the server 400.

In addition, according to an embodiment of the present disclosure, the media player 172 may be configured to calculate a fourth bitrate corresponding to reception of the stream segment and transmit the calculated fourth bitrate to the application 171, wherein the application 171 may be configured to calculate the first bitrate based on the fourth bitrate received from the media player 172.

In addition, according to an embodiment of the present disclosure, the media player 172 may be configured to calculate an average value of a predetermined number of recently calculated fifth bitrates among the fourth bitrates, and in response to a most recently calculated sixth bitrate among the fourth bitrates being greater than or equal to the average value, configured to transmit the sixth bitrate to the application 171, and in response to the sixth bitrate being less than the average value, configured to transmit the average value to the application 171, wherein the sixth bitrate may be included in the fifth bitrate.

In addition, according to an embodiment of the present disclosure, the application 171 may be configured to determine, as the first bitrate, a representative value of the fourth bitrates received from the media player 172, and configured to update the bitrate data stored in the memory 140 based on the first bitrate and a number of times the fourth bitrate is transmitted.

In addition, according to an embodiment of the present disclosure, the application 171 may be configured to add, to the bitrate data, the first bitrate and the number of times the fourth bitrate is transmitted.

In addition, according to an embodiment of the present disclosure, the application 171 may be configured to calculate an overall bitrate and a total number of times based on the second bitrate included in the bitrate data and a number of times corresponding to the second bitrate and based on the first bitrate and the number of times the fourth bitrate is transmitted, and configured to change the second bitrate included in the bitrate data and the number of times corresponding to the second bitrate to the overall bitrate and the total number of times.

According to an embodiment of the present disclosure, there is provided a method of operating a video display apparatus 100 configured to receive a stream segment using Adaptive Bitrate Streaming, the method including: in response to a streaming target being set, determining whether there is a first bitrate managed by a controller 170; in response to there being the first bitrate, determining a target bitrate based on the first bitrate; in response to there not being the first bitrate, determining the target bitrate based on a second bitrate included in the bitrate data stored in a memory 140; requesting a server 400 to transmit a stream segment corresponding to the target bitrate; and outputting a video corresponding to the stream segment corresponding to the target bitrate through a display 180.

In addition, according to an embodiment of the present disclosure, the method may further include, in response to the bitrate data not being stored in the memory 140, determining, as the target bitrate, a third bitrate which is a minimum value among at least one bitrate included in metadata received from the server 400.

In addition, according to an embodiment of the present disclosure, the method may further include: in response to predetermined content being set as the streaming target, generating a media player 172 corresponding to the predetermined content by an application 171 configured to provide a streaming service; and in response to playback of the predetermined content being ended, deleting the media player 172 by the application 171, wherein the requesting to the server 400 may include, by the media player 172, requesting the server 400 to transmit a stream segment corresponding to the target bitrate, and the outputting of the video through the display 180 may include, by the media player 172, processing the stream segment received from the server 400.

In addition, according to an embodiment of the present disclosure, the method may further include: by the media player 172, calculating a fourth bitrate corresponding to reception of the stream segment; by the media player 172, transmitting the calculated fourth bitrate to the application 171; and by the application 171, calculating the first bitrate based on the fourth bitrate received from the media player 172.

In addition, according to an embodiment of the present disclosure, the transmitting of the fourth bitrate to the application 171 by the media player 172 may include: calculating an average value of a predetermined number of recently calculated fifth bitrates among the fourth bitrates; in response to a most recently calculated sixth bitrate among the fourth bitrates being greater than or equal to the average value, transmitting the sixth bitrate to the application 171; and in response to the sixth bitrate being less than the average value, transmitting the average value to the application 171, wherein the sixth bitrate may be included in the fifth bitrate.

In addition, according to an embodiment of the present disclosure, the method may further include: by the application 171, determining, as the first bitrate, a representative value of the fourth bitrates received from the media player 172; and by the application 171, adding, to the bitrate data, the first bitrate and the number of times the fourth bitrate is transmitted.

In addition, according to an embodiment of the present disclosure, the method may further include: by the application 171, determining, as the first bitrate, a representative value of the fourth bitrates received from the media player 172; by the application 171, calculating an overall bitrate and a total number of times based on the second bitrate included in the bitrate data and a number of times corresponding to the second bitrate and based on the first bitrate and the number of times the fourth bitrate is transmitted; and by the application 171, changing the second bitrate included in the bitrate data and the number of times corresponding to the second bitrate to the overall bitrate and the total number of times.

The accompanying drawings are used to assist in easy understanding of various technical features and it should be understood that the embodiments presented herein are not limited by the accompanying drawings. As such, the present disclosure should be construed to extend to any alterations, equivalents and substitutes falling within the spirit and scope of the present disclosure.

Meanwhile, an operating method of the present disclosure can be realized as a processor-readable code written on a recording medium readable by a processor included in the audio device. The processor-readable recording medium may be any type of recording device in which data is stored in a processor-readable manner. Examples of the processor-readable recording medium include a ROM, a RAM, a CD-ROM, a magnetic tape, a floppy disc, an optical data storage, and a carrier wave, e.g., data transmission through the Internet. The processor-readable recording medium can be distributed over a plurality of computer systems connected to a network so that a processor-readable code is written thereto and executed therefrom in a decentralized manner.

While the present disclosure has been shown and described with reference to the preferred embodiments thereof, it should be understood that the present disclosure is not limited to the aforementioned specific embodiments, and various modifications and variations may be made by those skilled in the art without departing from the scope and spirit of the disclosure as defined by the appended claims, and the modified implementations should not be construed independently of the technical idea or prospect of the present disclosure.

## Claims

1. A video display apparatus comprising:
a network interface configured to communicate with a server that provides a stream segment using Adaptive Bitrate Streaming;
a display;
a memory configured to store bitrate data; and
a controller configured to output a video, corresponding to the stream segment, through the display,
wherein the controller is configured to determine whether there is a first bitrate managed by the controller in response to a streaming target being set, determine a target bitrate based on the first bitrate in response to there being the first bitrate, determine the target bitrate based on a second bitrate included in the bitrate data in response to there not being the first bitrate, and request the server to transmit a stream segment corresponding to the target bitrate.

2. The video display apparatus of claim 1, wherein in response to the bitrate data not being stored in the memory, the controller is configured to determine, as the target bitrate, a third bitrate which is a minimum value among at least one bitrate included in metadata received from the server.

3. The video display apparatus of claim 1, wherein the controller comprises an application configured to provide a streaming service,
wherein in response to predetermined content being set as the streaming target, the application is configured to generate a media player corresponding to the predetermined content, and in response to playback of the predetermined content being ended, configured to delete the media player,
wherein the media player is configured to request the server to transmit a stream segment corresponding to the target bitrate and process the stream segment received from the server.

4. The video display apparatus of claim 3, wherein the media player is configured to calculate a fourth bitrate corresponding to reception of the stream segment and transmit the calculated fourth bitrate to the application,
wherein the application is configured to calculate the first bitrate based on the fourth bitrate received from the media player.

5. The video display apparatus of claim 4, wherein the media player is configured to calculate an average value of a predetermined number of recently calculated fifth bitrates among the fourth bitrates, and in response to a most recently calculated sixth bitrate among the fourth bitrates being greater than or equal to the average value, configured to transmit the sixth bitrate to the application, and in response to the sixth bitrate being less than the average value, configured to transmit the average value to the application,
wherein the sixth bitrate is included in the fifth bitrate.

6. The video display apparatus of claim 4, wherein the application is configured to determine, as the first bitrate, a representative value of the fourth bitrates received from the media player, and configured to update the bitrate data stored in the memory based on the first bitrate and a number of times the fourth bitrate is transmitted.

7. The video display apparatus of claim 6, wherein the application is configured to add, to the bitrate data, the first bitrate and the number of times the fourth bitrate is transmitted.

8. The video display apparatus of claim 6, wherein the application is configured to calculate an overall bitrate and a total number of times based on the second bitrate included in the bitrate data and a number of times corresponding to the second bitrate and based on the first bitrate and the number of times the fourth bitrate is transmitted, and configured to change the second bitrate included in the bitrate data and the number of times corresponding to the second bitrate to the overall bitrate and the total number of times.

9. A method of operating a video display apparatus configured to receive a stream segment using Adaptive Bitrate Streaming, the method comprising:
in response to a streaming target being set, determining whether there is a first bitrate managed by a controller;
in response to there being the first bitrate, determining a target bitrate based on the first bitrate;
in response to there not being the first bitrate, determining the target bitrate based on a second bitrate included in the bitrate data stored in a memory;
requesting a server to transmit a stream segment corresponding to the target bitrate; and
outputting a video corresponding to the stream segment corresponding to the target bitrate through a display.

10. The method of claim 9, further comprising, in response to the bitrate data not being stored in the memory, determining, as the target bitrate, a third bitrate which is a minimum value among at least one bitrate included in metadata received from the server.

11. The method of claim 9, further comprising:
in response to predetermined content being set as the streaming target, generating a media player corresponding to the predetermined content by an application configured to provide a streaming service; and
in response to playback of the predetermined content being ended, deleting the media player by the application,
wherein the requesting to the server comprises, by the media player, requesting the server to transmit a stream segment corresponding to the target bitrate, and the outputting of the video through the display comprises, by the media player, processing the stream segment received from the server.

12. The method of claim 11, further comprising:
by the media player, calculating a fourth bitrate corresponding to reception of the stream segment;
by the media player, transmitting the calculated fourth bitrate to the application; and
by the application, calculating the first bitrate based on the fourth bitrate received from the media player.

13. The method of claim 12, wherein the transmitting of the fourth bitrate to the application by the media player comprises:
calculating an average value of a predetermined number of recently calculated fifth bitrates among the fourth bitrates;
in response to a most recently calculated sixth bitrate among the fourth bitrates being greater than or equal to the average value, transmitting the sixth bitrate to the application; and
in response to the sixth bitrate being less than the average value, transmitting the average value to the application,
wherein the sixth bitrate is included in the fifth bitrate.

14. The method of claim 12, further comprising:
by the application, determining, as the first bitrate, a representative value of the fourth bitrates received from the media player; and
by the application, adding, to the bitrate data, the first bitrate and the number of times the fourth bitrate is transmitted.

15. The method of claim 13, further comprising:
by the application, determining, as the first bitrate, a representative value of the fourth bitrates received from the media player;
by the application, calculating an overall bitrate and a total number of times based on the second bitrate included in the bitrate data and a number of times corresponding to the second bitrate and based on the first bitrate and the number of times the fourth bitrate is transmitted; and
by the application, changing the second bitrate included in the bitrate data and the number of times corresponding to the second bitrate to the overall bitrate and the total number of times.
